# EUROPEAN PATENT SPECIFICATION

(11) **EP 3 693 594 B1**
(45) Date of publication and mention of the grant of the patent: **21.12.2022**
(21) Application number: 18783051.8
(22) Date of filing: 11.06.2018
(51) Int. Cl.: F02K 7/06, F02K 7/20, F02C 5/12

(54) **JET ENGINE WITH CONTINUOUS AND DISCONTINUOUS IMPULSE**
DÜSENTRIEBWERK MIT KONTINUIERLICHEM UND DISKONTINUIERLICHEM IMPULS
MOTEUR À RÉACTION À IMPULSION CONTINUE ET DISCONTINUE

(30) Priority: 15.06.2017 ES 201730800
(43) Date of publication of application: 12.08.2020
(73) Proprietor: Acción Penas, Antonio, 15008 A Coruña (ES)
(72) Inventor: Acción Penas, Antonio, 15008 A Coruña (ES)
(74) Representative: García Gómez, José Donato
(86) International application number: PCT/ES2018/070419
(87) International publication number: WO 2018/229317

(56) References cited:
- WO-A1-2014/018416
- GB-A- 2 411 208
- US-A1- 2007 157 625

## Description

### Technical field of the invention

The present invention corresponds to the technical field of the internal combustion engine thermal machines used in the aviation sector, such as gas turbines, ramjet engines, turbojets, pulsejet engines, and other jet engines.

### Background of the invention

There are currently different types of jet engines to propel aircraft. Both pulsejet engines as well as ramjet engines are very inexpensive and easy to build, but both have drawbacks, because on one hand, pulsejet engines break valves very easily after operating for a time, and ramjet engines can only operate when aircraft exceed a minimum speed.

The existence of a jet engine, or any other invention with a similar application in the state of the art, which proposes the use of a ramjet engine that is capable of operating when the aircraft is moving at low speeds, or even while stopped, propelling the aircraft and surpassing said minimum speed without making use of heavy or large mechanism, turbojet engines, or launch vehicles, is not known, at least on the part of the applicant.

Other known jet engines are described in documents GB 2 411 208 A, US 2007/157625 A1, WO 2014/018416 A1.

### Description of the invention

The jet engine with continuous and discontinuous impulse that is described here comprises an air intake diffuser with a cylindrical exterior shape, a combustion chamber with a spark plug and several fuel injection means and an outlet nozzle, both with the same exterior shape as the diffuser.

It also comprises a rotating disk chamber located between the diffuser and the combustion chamber, which allows air to pass continuously or discontinuously from the diffuser to said combustion chamber.

Likewise, the engine comprises an alternative engine with an alternative shaft of that alternative engine connected to the main shaft by means of a first cam, a first sliding crank, and a first tie rod, several means for stopping the main shaft, and a pressurized air chamber with a compressor, connected to the main shaft by means of a second sliding crank and a second tie rod.

The fuel injection means are connected to the main shaft by means of several means of intermittent actuation of the injection means, suitable for activating the injection in synchronization with the passage of the air from the diffuser to the combustion chamber.

According to a preferred embodiment, the discontinuous disk chamber has a first flat cover and a second flat cover secured parallel to the cross- section of the diffuser and the combustion chamber, and with dimensions such that they are larger than them, and a first and a second geared wheel, both arranged in between said covers.

The first wheel is connected coaxially to the main shaft of the engine, and the second wheel and both covers are positioned coaxially with the diffuser, with a same secondary shaft parallel to the main shaft.

In a preferred embodiment, the second wheel has a gear ratio of 3:1 with the first wheel, and the surfaces of both the second wheel and both covers of the rotating disk chamber have three openings and three closed zones, in an alternating and equidistant radial arrangement such that it allows the passage of air from the diffuser to the combustion chamber when the openings of the second wheel coincide with those of the covers and blocks the passage of air when they do not.

According to a preferred embodiment, the means of intermittent actuation consist of a second cam and a transmission belt.

In another preferred embodiment, the means of intermittent actuation consist of a solenoid valve.

According to a preferred embodiment, the means of stopping the main shaft consist of a hydraulic brake connected to a brake disk that acts on said main shaft.

According to a preferred embodiment, the compressor of the pressurized air chamber consists of an internal piston, connected perpendicularly at its center to the second sliding crank.

In a preferred embodiment, the engine comprises several electronic means to control the activation and deactivation of the alternative engine, the actuation of the piston of the pressurized air chamber, of the stopping means, and of the spark plug spark.

The engine proposed here provides significant improvements over the state of the art.

This is because it provides a simple, lightweight, and effective mechanism to solve the existing problem in jet engines to propel aircraft, which can be used for aircraft capable of subsonic, supersonic, and hypersonic flight, for a wide range of speeds, from stationary to Mach5 or faster.

Therefore, aircraft that are equipped with this engine can fly at hypersonic speeds without the need for complex or heavy mechanisms, or auxiliary vehicles to achieve a minimum speed, and aircraft that fly at subsonic speeds can have a simpler, lighter engine with a better thrust-weight ratio that if they were equipped with turbojets.

### Brief description of the drawings

In order to provide a better understanding of the characteristics of the invention, in accordance with a preferred practical embodiment of the invention, a set of drawings is included as an integral part of the description, in which the following elements have been represented for the purposes of illustration but not limitation:
Figure 1.- Shows a perspective view of the jet engine with continuous and discontinuous impulse, for a preferred embodiment of the invention.
Figure 2.- Shows an exploded view of the rotating disk chamber, for a preferred embodiment of the invention.

### Detailed description of a preferred embodiment of the invention

The figures provided show how in a preferred embodiment of the invention, the jet engine (1) with continuous and discontinuous impulse that is described here comprises an air intake diffuser (2) with a cylindrical exterior shape, a combustion chamber (3) with a spark plug and several fuel injection means (19) and an outlet nozzle (4), both with the same exterior shape as the diffuser (2).

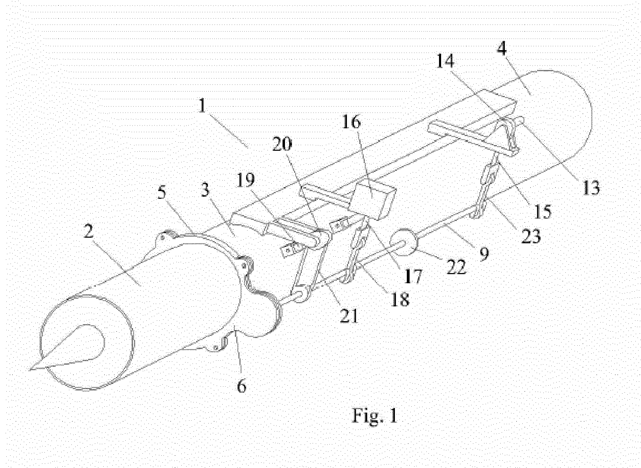

As shown in Figure 1, the engine (1) also comprises a rotating disk chamber (5) located between the diffuser (2) and the combustion chamber (3). This rotating disk chamber (5) allows air to pass continuously or discontinuously from the diffuser (2) to said combustion chamber (3).

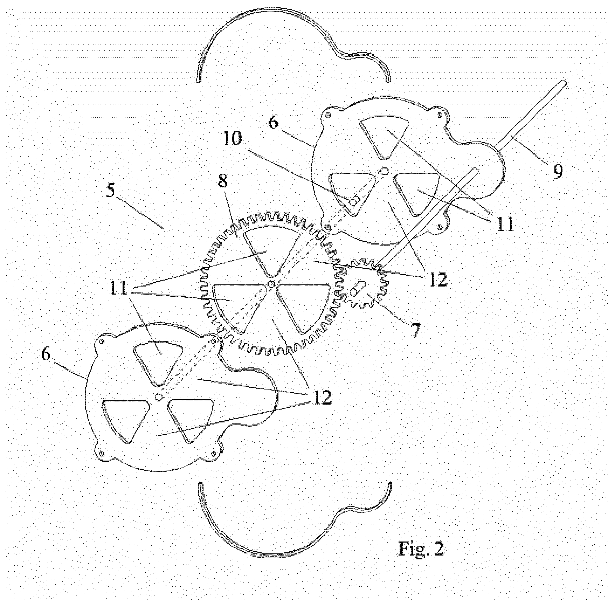

In this preferred embodiment of the invention, as shown in Figure 2, the rotating disk chamber (5) has a first flat cover (6) and a second flat cover (6) secured parallel to the cross-section of the diffuser (2) and the combustion chamber (3), and with dimensions such that they are larger than them, and a first and a second geared wheel (7,8), both arranged in between said covers (6).

As shown in Figure 2, the first wheel (7) is connected coaxially to the main shaft (9) of the engine, and the second wheel (8) and both covers (6) are positioned coaxially with the diffuser (2), with a same secondary shaft (10) parallel to the main shaft (9).

In this preferred embodiment of the invention, the second wheel (8) has a gear ratio of 3:1 with the first wheel (7), and the surfaces of both the second wheel (8) and both covers (6) have three openings (11) and three closed zones (12), in an alternating and equidistant radial arrangement such that it allows the passage of air from the diffuser (2) to the combustion chamber (3) when the openings (11) of the second wheel (8) coincide with those of the covers (6) and blocks the passage of air when they do not.

This jet engine (1) with continuous and discontinuous impulse also comprises an alternative engine (not shown) with an alternative shaft (13) of that alternative engine connected to the main shaft (9) by means of a first cam (14), a first sliding crank (15), and a first tie rod (23), several means for stopping the main shaft, and a pressurized air chamber (16) with a compressor, connected to the main shaft (9) by means of a second sliding crank (17) and a second tie rod (18).

Also, in this engine (1), the fuel injection means (19) are connected to the main shaft (9) by means of several means of intermittent actuation of the injection means, suitable for activating the injection in synchronization with the passage of the air from the diffuser (2) to the combustion chamber (3). In this preferred embodiment of the invention, said means of intermittent actuation consist of a second cam (20) and a transmission belt (21).

What this achieves is that when the aircraft is moving at a slow speed, below the minimum functional speed of a ramjet engine, which is on the order of 320 km/h, or when it is stopped, the alternative engine turns the alternative shaft (13), which turns the main shaft (9) of the engine (1) through the connection provided by the first cam (14), the first sliding crank (15), and the first tie rod (23). Due to the connection by means of the first cam (14) and its eccentricity, the alternative engine turns the alternative shaft (13) with a constant angular velocity, while the main shaft (9) turns at a non-uniform angular velocity.

When the main shaft (9) rotates, it causes the first wheel (7) of the rotating disk chamber (5) to turn, and this first wheel (7) causes the second wheel (8) to turn.

Therefore, when said main shaft (9) is turned, the turning of the second cam (20) to actuate the fuel injection means (19) is generated. This second cam (20) is turned by the connection to the main shaft (9) by means of the transmission belt (21), such that both said second cam (20) and the first wheel (7) turn together with the main shaft (9).

Due to the 3:1 gear ratio between both first and second wheels (7, 8), each revolution of the main shaft (9) generates one rotation of the first wheel (7) and one-third of a revolution of the second wheel (8). Likewise, when the second wheel (8) makes one complete rotation, it generates three revolutions of the first wheel (7) and three revolutions of the second cam (20) of the means of intermittent actuation, along with its corresponding three injections of fuel.

Thus, thanks to the geometry of the rotating disk chamber (5) and the second cam (20) for the actuation of the fuel injection means (19), when the second wheel (8) is turned, the three closed zones (12) of the second wheel coincide with the openings (11) of both covers (6). At this moment, the fuel injection means (19) are actuated by the eccentricity of the second cam (20) and the fuel-air mixtures is ignited by a spark produced by the spark plug.

This generates the combustion of the fuel-air mixture and increases the temperature to 2300°C and the air pressure to 50 bar, approximately, with the air discharged through the nozzle (4) at high speed and propelling the aircraft with a discontinuous impulse.

When the rotation of the main shaft (9) is varied, a position in which the openings (11) of the second wheel (8) coincide with those of both covers (6) of the rotating disk chamber (5) is reached. The second cam (20) has also turned, and in this case no longer actuates the fuel injection means (19). Therefore, in this position in which the openings (11) coincide, fuel is not injected and the air from the diffuser (2) circulates through the rotating disk chamber (5) towards the combustion chamber (3) and the nozzle (4) due to the vacuum generated when the air is discharged at high speed by the combustion chamber (3) in the opposite direction from the rotating disk chamber (5).

As soon as the aircraft exceeds the minimum speed, which in this preferred embodiment of the invention is considered to be 320 km/h, the alternative engine turns off and the means for stopping the main shaft are activated. In this preferred embodiment of the invention, said stopping means consist of a hydraulic brake connected to a brake disk (22) that acts on the main shaft (9) and cause it to stop turning and stop at an indeterminate angle.

Following this, said hydraulic brake is deactivated and pressurized air is injected into the pressurized air chamber (16).

In this preferred embodiment of the invention, the compressor of the pressurized air chamber (16) consists of an internal piston, connected perpendicularly at its center to the second sliding crank (17). When pressurized air is injected, the piston lowers, actuating the second sliding crank (17) and the second tie rod (18), such that the main shaft (9) is fixed at an angle at which the openings (11) of the second wheel (8) and the two covers (6) line up. At this moment, the fuel injection means (19) are actuated, and the fuel-air mixtures is ignited by a spark produced by the spark plug.

Therefore, at this time, fuel can be injected constantly and the engine (1) will operate continuously. In this case, the hot air is not discharged through the diffuser (2) because the aircraft has exceeded the minimum speed considered of 320 km/h.

On the other hand, when the aircraft is traveling faster than said minimum speed of 320 km/h without exceeding the maximum speed for functioning in discontinuous mode of 640 km/h, the engine (1) operating in ramjet mode may return to operation in discontinuous mode.

To do this, the pressure in the pressurized air chamber (16) is reduced, actuation of the fuel injection means (19) is stopped, and the reciprocating engine is turned on so that the engine operates in discontinuous mode.

In this preferred embodiment of the invention, the engine (1) comprises several electronic means to control the activation and deactivation of the alternative engine, the actuation of the piston of the pressurized air chamber (16), of the stopping means, and of the spark plug spark.

The embodiment described constitutes just one example of the present invention; therefore, the specific details, terms, and phrases used in this description must not be considered as limiting, but rather merely as the representative base that provides an understandable description, as well as sufficient information for a person skilled in the art to apply the present invention.

The jet engine with continuous and discontinuous impulse described here provides significant improvements over the state of the art.

It provides a simple and effective engine that allows aircraft that are equipped with it to fly at hypersonic speeds without the need for complex or heavy mechanisms, or auxiliary vehicles to achieve a minimum speed. In addition, aircraft that fly at subsonic speeds have an engine that is simpler, more lightweight, and with a better thrust-weight ratio than a turbojet.

Therefore, this makes dual functioning of the engine possible, operating as a ramjet engine when the aircraft exceeds the minimum speed for pulsejet engines, up to hypersonic speeds, and as a discontinuous impulse jet engine while the minimum speed is not exceeded.

## Claims

1. A jet engine (1) with continuous and discontinuous impulse, **characterized in that** it comprises
- an air intake diffuser (2) with a cylindrical exterior shape;
- a combustion chamber (3) with a spark plug and several fuel injection means (19) and an outlet nozzle (4), both with the same exterior shape as the diffuser;
- an alternative engine with an alternative shaft (13) of said alternative engine connected to a main shaft (9) of the engine (1) by means of a first cam (14), a first sliding crank (15) and a first tie rod (23)
- several means of stopping the main shaft (9), and;
- a pressurized air chamber (16) with a compressor, connected to the main shaft (9) by means of a second sliding crank (17) and a second tie rod (18) and;
- -a rotating disk chamber (5) located between the diffuser (2) and the combustion chamber (3), which allows air to pass continuously or discontinuously from the diffuser (2) to said combustion chamber (3); said rotating disk chamber (5) has a first flat cover (6) and a second flat cover (6) secured parallel to the cross- section of the diffuser (2) and the combustion chamber (3), and with dimensions such that they are larger than said cross-sections, and a first and a second geared wheel (7, 8), both arranged in between said covers (6), wherein the first wheel (7) is connected coaxially to the main shaft (9) of the engine (1), and the second wheel (8) and both covers (6) are positioned coaxially with the diffuser (2), with a same secondary shaft (10) parallel to the main shaft (9).
- wherein the fuel injection means (19) are connected to the main shaft(9) by means of several means of intermittent actuation of the injection means, suitable for activating the injection in synchronization with the passage of the air from the diffuser (2) to the combustion chamber (3).

2. The jet engine (1) with continuous and discontinuous impulse, according to claim 1, **characterized in that** the second wheel (8) has a gear ratio of 3:1 with the first wheel (7), and the surfaces of both the second wheel (8) and both covers (6) of the rotating disk chamber (5) have three openings (11) and three closed zones (12), in an alternating and equidistant radial arrangement such that it allows the passage of air from the diffuser (2) to the combustion chamber (3) when the openings (11) of the second wheel (8) coincide with those of the covers (6) and blocks the passage of air when they do not.

3. The jet engine (1) with continuous and discontinuous impulse, according to any of the previous claims, **characterized in that** the means of intermittent actuation consist of a second cam (20) and a transmission belt (21).

4. The jet engine (1) with continuous and discontinuous impulse, according to claim 1, **characterized in that** the means of intermittent actuation consist of a solenoid valve.

5. The jet engine (1) with continuous and discontinuous impulse, according to any of the previous claims, **characterized in that** the means of stopping the main shaft (9) consist of a hydraulic brake connected to a brake disk (22) that acts on said main shaft (9).

6. The jet engine (1) with continuous and discontinuous impulse, according to any of the previous claims, **characterized in that** the compressor of the pressurized air chamber (16) consists of an internal piston, connected perpendicularly at its center to the second sliding crank (17).

7. The jet engine (1) with continuous and discontinuous impulse, according to any of the previous claims, **characterized in that** it comprises several electronic means to control the activation and deactivation of the alternative engine, the actuation of the piston of the pressurized air chamber (16), of the stopping means, and of the spark plug spark.

## Patentansprüche

1. Strahltriebwerk (1) mit kontinuierlichem und diskontinuierlichem Impuls, **dadurch gekennzeichnet, dass** es Folgendes umfasst:
- einen Lufteinlaufdiffusor (2) mit einer zylindrischen Außenform;
- eine Brennkammer (3) mit einer Zündkerze und mehreren Treibstoff-Einspritzmitteln (19) und eine Auslassdüse (4), die beide die gleiche Außenform wie der Diffusor aufweisen;
- einen Hubkolbenmotor mit einer Kurbelwelle (13) des Hubkolbenmotors, die mit einer Hauptwelle (9) des Triebwerks (1) über einen ersten Nocken (14), eine erste Kurbel (15) und eine erste Pleuelstange (23) verbunden ist;
- mehrere Mittel zum Anhalten der Hauptwelle (9); und
- eine Druckluftkammer (16) mit einem Kompressor, der mit der Hauptwelle (9) über eine zweite Kurbel (17) und eine zweite Pleuelstange (18) verbunden ist; und
- eine Drehscheibenkammer (5), die sich zwischen dem Diffusor (2) und der Brennkammer (3) befindet und die es ermöglicht, dass Luft kontinuierlich oder diskontinuierlich von dem Diffusor (2) zu der Brennkammer (3) strömt; wobei die Drehscheibenkammer (5) eine erste flache Abdeckung (6) und eine zweite flache Abdeckung (6), die parallel zu dem Querschnitt des Diffusors (2) und der Brennkammer (3) befestigt sind und Abmessungen aufweisen, die größer als die Querschnitte sind, und ein erstes und ein zweites Zahnrad (7, 8), die beide zwischen den Abdeckungen (6) angeordnet sind, aufweist, wobei das erste Rad (7) koaxial mit der Hauptwelle (9) des Triebwerks (1) verbunden ist, und das zweite Rad (8) und beide Abdeckungen (6) koaxial mit dem Diffusor (2) positioniert sind und sich auf der gleichen Sekundärwelle (10) befinden, die parallel zu der Hauptwelle (9) verläuft,
- wobei die Treibstoff-Einspritzmittel (19) mit der Hauptwelle(9) über mehrere Mittel zur intermittierenden Betätigung der Einspritzmittel verbunden sind, die geeignet sind, die Einspritzung synchron mit dem Strömen der Luft von dem Diffusor (2) zu der Brennkammer (3) zu aktivieren.

2. Strahltriebwerk (1) mit kontinuierlichem und diskontinuierlichem Impuls nach Anspruch 1, **dadurch gekennzeichnet, dass** das zweite Rad (8) ein Übersetzungsverhältnis von 3:1 zu dem ersten Rad (7) aufweist, und die Oberflächen sowohl des zweiten Rades (8) als auch der beiden Abdeckungen (6) der Drehscheibenkammer (5) drei Öffnungen (11) und drei geschlossene Bereiche (12) in einer abwechselnden und äquidistanten radialen Anordnung aufweisen, sodass sie das Strömen von Luft von dem Diffusor (2) zu der Brennkammer (3) ermöglicht, wenn sich die Öffnungen (11) des zweiten Rades (8) mit denen der Abdeckungen (6) decken, und das Strömen von Luft blockiert, wenn sie dies nicht tun.

3. Strahltriebwerk (1) mit kontinuierlichem und diskontinuierlichem Impuls nach einem der vorhergehenden Ansprüche, **dadurch gekennzeichnet, dass** die Mittel zur intermittierenden Betätigung aus einem zweiten Nocken (20) und einem Treibriemen (21) bestehen.

4. Strahltriebwerk (1) mit kontinuierlichem und diskontinuierlichem Impuls nach Anspruch 1, **dadurch gekennzeichnet, dass** die Mittel zur intermittierenden Betätigung aus einem Magnetventil bestehen.

5. Strahltriebwerk (1) mit kontinuierlichem und diskontinuierlichem Impuls nach einem der vorhergehenden Ansprüche, **dadurch gekennzeichnet, dass** die Mittel zum Anhalten der Hauptwelle (9) aus einer Hydraulikbremse bestehen, die mit einer Bremsscheibe (22) verbunden ist, die auf die Hauptwelle (9) einwirkt.

6. Strahltriebwerk (1) mit kontinuierlichem und diskontinuierlichem Impuls nach einem der vorhergehenden Ansprüche, **dadurch gekennzeichnet, dass** der Kompressor der Druckluftkammer (16) aus einem inneren Kolben besteht, der in seiner Mitte senkrecht mit der zweiten Kurbel (17) verbunden ist.

7. Strahltriebwerk (1) mit kontinuierlichem und diskontinuierlichem Impuls nach einem der vorhergehenden Ansprüche, **dadurch gekennzeichnet, dass** es mehrere elektronische Mittel zum Steuern der Aktivierung und Deaktivierung des Hubkolbenmotors, der Betätigung des Kolbens der Druckluftkammer (16), der Anhaltemittel und des Funkens der Zündkerze umfasst.

## Revendications

1. Moteur à réaction (1) à impulsion continue et discontinue, **caractérisé en ce qu'**il comprend
- un diffuseur d'admission d'air (2) ayant une forme extérieure cylindrique ;
- une chambre de combustion (3) avec une bougie d'allumage et plusieurs moyens d'injection de carburant (19) et une buse de sortie (4), tous deux ayant la même forme extérieure que le diffuseur ;
- un moteur alternatif avec un arbre alternatif (13) dudit moteur alternatif relié à un arbre principal (9) du moteur (1) au moyen d'une première came (14), d'une première manivelle coulissante (15) et d'un premier tirant (23)
- plusieurs moyens d'arrêt de l'arbre principal (9), et
- une chambre à air sous pression (16) avec un compresseur, reliée à l'arbre principal (9) au moyen d'une seconde manivelle coulissante (17) et d'un second tirant (18) et ;
- une chambre à disques rotatifs (5) située entre le diffuseur (2) et la chambre de combustion (3), qui permet à l'air de passer de manière continue ou discontinue du diffuseur (2) à ladite chambre de combustion (3) ; ladite chambre à disques rotatifs (5) a un premier couvercle plat (6) et un second couvercle plat (6) fixés parallèlement à la section transversale du diffuseur (2) et de la chambre de combustion (3), et avec des dimensions telles qu'elles sont plus grandes que lesdites sections transversales, et une première et une seconde roue dentée (7, 8), toutes deux disposées entre lesdits couvercles (6), où la première roue (7) est reliée coaxialement à l'arbre principal (9) du moteur (1), et la seconde roue (8) et les deux couvercles (6) sont positionnés coaxialement au diffuseur (2), avec un même arbre secondaire (10) parallèle à l'arbre principal (9),
- où les moyens d'injection de carburant (19) sont reliés à l'arbre principal (9) grâce à plusieurs moyens d'actionnement intermittent des moyens d'injection, aptes à activer l'injection en synchronisation avec le passage de l'air du diffuseur (2) à la chambre de combustion (3).

2. Moteur à réaction (1) à impulsion continue et discontinue, selon la revendication 1, **caractérisé en ce que** la seconde roue (8) a un rapport d'engrenage de 3:1 avec la première roue (7), et les surfaces de la seconde roue (8) et des deux couvercles (6) de la chambre à disques rotatifs (5) ont trois ouvertures (11) et trois zones fermées (12), dans une disposition radiale alternée et équidistante, de sorte à permettre le passage de l'air du diffuseur (2) à la chambre de combustion (3) lorsque les ouvertures (11) de la seconde roue (8) coïncident avec celles des couvercles (6) et bloque le passage de l'air lorsqu'elles ne le font pas.

3. Moteur à réaction (1) à impulsion continue et discontinue, selon l'une quelconque des revendications précédentes, **caractérisé en ce que** les moyens d'actionnement intermittent sont constitués d'une seconde came (20) et d'une courroie de transmission (21) .

4. Moteur à réaction (1) à impulsion continue et discontinue, selon la revendication 1, **caractérisé en ce que** les moyens d'actionnement intermittent sont constitués d'une électrovanne.

5. Moteur à réaction (1) à impulsion continue et discontinue, selon l'une quelconque des revendications précédentes, **caractérisé en ce que** les moyens d'arrêt de l'arbre principal (9) consistent en un frein hydraulique relié à un disque de frein (22) qui agit sur ledit arbre principal (9).

6. Moteur à réaction (1) à impulsion continue et discontinue, selon l'une quelconque des revendications précédentes, **caractérisé en ce que** le compresseur de la chambre d'air sous pression (16) est constitué d'un piston interne, relié perpendiculairement par son centre à la seconde manivelle coulissante (17).

7. Moteur à réaction (1) à impulsion continue et discontinue, selon l'une quelconque des revendications précédentes, **caractérisé en ce qu'**il comprend plusieurs moyens électroniques pour commander l'activation et la désactivation du moteur alternatif, l'actionnement du piston de la chambre à air sous pression (16), des moyens d'arrêt et de l'étincelle de bougie.
